# EUROPÄISCHE PATENTSCHRIFT

(11) **EP 4 526 563 B1**
(45) Veröffentlichungstag und Bekanntmachung des Hinweises auf die Patenterteilung: **28.01.2026**
(21) Anmeldenummer: 23720112.4
(22) Anmeldetag: 19.04.2023
(51) Int. Cl.: F03D 7/02, F03D 80/00, F03D 80/70

(54) **FEDERND GELAGERTES GETRIEBEGEHÄUSE II**
SPRING-MOUNTED GEARBOX HOUSING II
CARTER DE BOÎTE DE VITESSES MONTÉ SUR RESSORT

(30) Priorität: 17.05.2022 DE 102022204900
(43) Veröffentlichungstag der Anmeldung: 26.03.2025
(73) Patentinhaber: ZF Friedrichshafen AG, 88046 Friedrichshafen (DE); ZF Wind Power Antwerpen NV, 3920 Lommel (BE)
(72) Erfinder: TREDE, Alf, 25885 Immenstedt (DE)
(74) Vertreter: ZF Friedrichshafen AG
(86) Internationale Anmeldenummer: PCT/EP2023/060065
(87) Internationale Veröffentlichungsnummer: WO 2023/222319

(56) Entgegenhaltungen:
- EP-A1- 4 060 189
- EP-A2- 1 564 406
- DE-A1- 102010 009 863
- JP-A- 2013 144 970
- JP-A- 2013 181 445
- US-A1- 2008 308 980
- US-B2- 10 947 958
- US-B2- 9 366 330

## Beschreibung

Die Erfindung betrifft eine Anordnung nach dem Oberbegriff von Anspruch 1 und eine Windkraftanlage nach dem Oberbegriff von Anspruch 11.

Aus dem Stand der Technik sind Anordnungen bekannt, um ein Gehäuse eines Getriebes einer Windkraftanlage federnd in einer Gondel der Windkraftanlage zu fixieren. Das Gehäuse stützt sich dabei über zylindrische Elastomere in der Gondel ab. Eine Mittelachse der Elastomere ist parallel zu einer Drehachse einer Eingangswelle des Getriebes ausgerichtet.

Der Erfindung liegt die Aufgabe zugrunde, die Fixierung eines Gehäuses eines Windkraftgetriebes in einer Gondel zu verbessern. Diese Aufgabe wird gelöst durch eine Anordnung nach Anspruch 1 und eine Windkraftanlage nach Anspruch 11. Bevorzugte Weiterbildungen sind in den Unteransprüchen enthalten und ergeben sich aus nachfolgender Beschreibung.

Die erfindungsgemäße Anordnung dient der Fixierung eines Gehäuses eines Windkraftgetriebes, das heißt eines zur Verwendung in einer Windkraftanlage vorgesehenen Getriebes, in einer Gondel der Windkraftanlage. Eine Wandung des Gehäuses kapselt einen Hohlraum, in dem sich die Innereien des Getriebes, wie Wellen, Lager und Zahnräder, befinden. Beispielsweise kann das Gehäuse eine Rotor- bzw. Eingangswelle des Getriebes und deren Lager kapseln.

Mit Gondel wird eine Vorrichtung zur Aufnahme des Antriebsstrangs einer Windkraftanlage bezeichnet. Die Gondel umfasst eine Tragstruktur zur Fixierung des Antriebsstrangs, insbesondere zur Fixierung eines in dem Antriebsstrang enthaltenen Getriebes.

Zu der erfindungsgemäßen Anordnung gehören ein gehäusefestes Mittel, ein gondelfestes Mittel und mindestens zwei Federvorrichtungen - eine erste Federvorrichtung und eine zweite Federvorrichtung.

Ein gehäusefestes Mittel bezeichnet ein Mittel, das fix, das heißt ohne die Möglichkeit einer Relativbewegung, mit dem Gehäuse verbunden ist. Analog bezeichnet ein gondelfestes Mittel ein Mittel, das fix mit der Gondel verbunden ist.

Eine Federvorrichtung ist eine Vorrichtung bestehend aus einem oder mehreren Federelementen. Als Federelemente kommen etwa Elastomere, das heißt aus einem Elastomer bestehenden Mittel, oder Hydrolager zum Einsatz.

Die erste Federvorrichtung und die zweite Federvorrichtung stützen das gehäusefeste Mittel gegen das gondelfeste Mittel ab. Sie verbinden also das gehäusefeste Mittel kraftleitend und federnd mit dem gondelfesten Mittel. Zu diesem Zweck sind die erste Federvorrichtung und die zweite Federvorrichtung vorzugsweise mit dem gehäusefesten Mittel und/oder dem gondelfesten Mittel gefügt.

Die Federvorrichtungen stützen das gehäusefeste Mittel in entgegengesetzte Richtungen entlang einer Stützachse gegen das gondelfeste Mittel ab. Die erste Federvorrichtung stützt also das gehäusefeste Mittel gegen das gondelfeste Mittel in eine erste Richtung ab. Die zweite Federvorrichtung stützt das gehäusefeste Mittel gegen das gondelfeste Mittel in eine zweite Richtung ab. Die erste Richtung und die zweite Richtung sind einander entgegengesetzt. Wird die erste Federvorrichtung auf Druck belastet, wird die zweite Federvorrichtung in entgegengesetzter Richtung auf Zug belastet. Wird umgekehrt die zweite Federvorrichtung auf Druck belastet, wird die erste Federvorrichtung in Gegenrichtung auf Zug belastet. Die Stützachse verläuft bevorzugt orthogonal zu einer Drehachse einer Eingangswelle des Windkraftgetriebes.

Erfindungsgemäß sind die Federvorrichtungen auf unterschiedlichen Seiten einer Ebene angeordnet. Die Ebene verläuft parallel zu der Drehachse der Eingangswelle des Windkraftgetriebes. Insbesondere kann die Ebene die Drehachse der Eingangswelle enthalten. Vorzugsweise ist die Ebene orthogonal zu der Stützachse ausgerichtet.

Von der Drehachse der Eingangswelle abhängig sind die Richtungen der Kräfte, mit denen die Federvorrichtungen belastet werden. Insbesondere ist vom Verlauf der Drehachse die Richtung eines Antriebsmoments abhängig, das in den Federvorrichtungen abgestützt wird und die Richtung einer Gewichtskraft des Windkraftgetriebes, die über die Federvorrichtungen in die Gondel eingeleitet wird. Durch die erfindungsgemäße Ausrichtung der Ebene und die davon abhängige Anordnung der Federvorrichtungen wird eine Federvorrichtung im Wesentlichen auf Druck, die andere im Wesentlichen auf Zug belastet. Durch Wahl und Ausgestaltung der Federvorrichtung ist daher eine verbesserte Anpassung an die abzustützenden Kräfte möglich. Insbesondere lässt sich das Verhalten der Anordnung im Hinblick auf Schwingungsbelastungen optimieren.

In einer bevorzugten Weiterbildung sind die erste Federvorrichtung und/oder die zweite Federvorrichtung bezüglich der Stützachse drehsymmetrisch bzw. rotationssymmetrisch. Dies bedeutet, dass die erste Federvorrichtung und/oder die zweite Federvorrichtung eine Form haben, die durch Drehung um mindestens einen Winkel um die Stützachse auf sich selbst abbildbar ist. Insbesondere können die erste Federvorrichtung und/oder die zweite Federvorrichtung im engeren Sinne rotationssymmetrisch sein. In dem Fall lässt sich die Form der ersten Federvorrichtung und/oder der zweiten Federvorrichtung durch Drehung um jeden beliebigen Winkel um die Stützachse auf sich selbst abbilden.

Durch die weiterbildungsgemäße Drehsymmetrie der ersten Federvorrichtung und/oder der zweiten Federvorrichtung erhält man einen besonders einfachen Aufbau der Anordnung. Dies vereinfacht die oben beschriebene Auslegung der Federvorrichtungen.

Bevorzugt sind die erste Federvorrichtung und die zweite Federvorrichtung bezüglich der oben genannten Ebene zueinander spiegelsymmetrisch weitergebildet. Dadurch lassen sich die erste Federvorrichtung und die zweite Federvorrichtung gegeneinander austauschen. Infolgedessen sinkt die Bauteilvielfalt, was zu Kosteneinsparungen führt.

Die erste Federvorrichtung ist in einem ersten Teil des gehäusefesten Mittels fixiert. Entsprechend ist die zweite Federvorrichtung in einem zweiten Teil des gehäusefesten Mittels fixiert. Die spiegelsymmetrische Weiterbildung bedingt, dass auch der erste Teil und der zweite Teil des gehäusefesten Mittels bezüglich der oben genannten Ebene zueinander spiegelsymmetrisch sind.

Die oben genannte Ebene schneidet in einer bevorzugten Weiterbildung das gehäusefeste Mittel und/oder das gondelfeste Mittel. Schneidet die Ebene das gehäusefeste Mittel, ergibt sich ein Aufbau der Anordnung mit Federvorrichtungen, die auf unterschiedlichen Seiten des gehäusefesten Mittels angeordnet sind. Umgekehrt ergibt sich ein Aufbau mit Federvorrichtungen, die auf unterschiedlichen Seiten des gondelfesten Mittels angeordnet sind, wenn die Ebene das gondelfeste Mittel schneidet.

Darüber hinausgehend wird eine Anordnung eines Teils des gondelfesten Mittels zwischen der ersten Federvorrichtung und der zweiten Federvorrichtung sowie zwischen einem ersten Teil und einem zweiten Teil des gehäusefesten Mittels bevorzugt. Die erste Federvorrichtung ist dabei zwischen dem ersten Teil des gehäusefesten Mittels und dem Teil des gondelfesten Mittels angeordnet bzw. zwischen dem ersten Teil des gehäusefesten Mittels und dem Teil des gondelfesten Mittels verspannt. Analog ist die zweite Federvorrichtung zwischen dem zweiten Teil des gehäusefesten Mittels und dem Teil des gondelfesten Mittels angeordnet bzw. zwischen dem zweiten Teil des gehäusefesten Mittels und dem Teil des gondelfesten Mittels verspannt.

Alternativ kann die Anordnung derart weitergebildet sein, dass ein Teil des gehäusefesten Mittels zwischen den Federvorrichtungen sowie zwischen einem ersten Teil und einem zweiten Teil des gondelfesten Mittels angeordnet ist, wobei die erste Federvorrichtung zwischen dem ersten Teil des gondelfesten Mittels und dem Teil des gehäusefesten Mittels angeordnet bzw. verspannt ist, und wobei die zweite Federvorrichtung zwischen dem zweiten Teil des gondelfesten Mittels und dem Teil des gehäusefesten Mittels angeordnet bzw. verspannt ist.

In bevorzugten Weiterbildungen ist das gondelfeste Mittel mindestens teilweise zwischen den Federvorrichtungen und einem ersten Teil und einem zweiten Teil des gehäusefesten Mittels angeordnet ist. Daraus ergeben sich mutatis mutandis, das heißt durch Austausch des gondelfesten Mittels und des gehäusefesten Mittels, alternative Weiterbildungen, die sich auf eine Anordnung beziehen, bei der mindestens ein Teil des gehäusefesten Mittels zwischen den Federvorrichtungen und zwischen einem ersten Teil und einem zweiten Teil des gondelfesten Mittels angeordnet ist.

Bevorzugt ist das gehäusefeste Mittel mit einem Verbindungselement weitergebildet. Dieses verbindet den ersten Teil und den zweiten Teil des gehäusefesten Mittels miteinander. Das Verbindungselement verläuft also zwischen dem ersten Teil und dem zweiten Teil und geht an der jeweiligen Verbindungsstelle in den ersten Teil bzw. den zweiten Teil über. Insbesondere kann der Übergang einstückig ausgestaltet sein. In dem Fall ist das Verbindungselement einstückig mit dem ersten Teil und dem zweiten Teil des gehäusefesten Mittels verbunden. Das Verbindungselement ist beispielsweise zylindrisch ausgestaltet. Insbesondere kann es die Form eines geraden Kreiszylinders haben.

Weiterbildungsgemäß weist das gondelfeste Mittel eine Aussparung auf. Diese ist als ein durchgehendes Loch ausgestaltet, durch welches das Verbindungselement hindurch verläuft. Entsprechend umschließt die Aussparung das Verbindungselement. Da das Verbindungselement den ersten Teil und den zweiten Teil des gehäusefesten Mittels miteinander verbindet, befinden sich diese auf unterschiedlichen Seiten der Aussparung.

Darüber hinausgehend bevorzugt ist die Anordnung mit einer dritten Federvorrichtung weitergebildet. Diese dient der Abstützung des gehäusefesten Mittels gegen das gondelfeste Mittel orthogonal zu der Stützachse.

Die dritte Federvorrichtung ist weiterbildungsgemäß mindestens teilweise in der Aussparung des gondelfesten Mittels angeordnet. Die dritte Federvorrichtung weist ihrerseits eine Aussparung auf, die als durchgehendes Loch ausgebildet ist, durch das Verbindungselement hindurch verläuft.

Die Weiterbildung mit einer dritten Federvorrichtung ist vorteilhaft, da sich die dritte Federvorrichtung unabhängig von der ersten Federvorrichtung und der zweiten Federvorrichtung auslegen lässt. Dadurch ist es möglich, das gehäusefeste Mittel gegen das gondelfeste Mittel in Orthogonalrichtung mit einem spezifisch angepassten Federelement abzustützen, während die Eigenschaften der ursprünglichen Abstützung durch die erste Federvorrichtung und die zweite Federvorrichtung unverändert bleiben.

Bevorzugt sind die erste Federvorrichtung und/oder die zweite Federvorrichtung jeweils in Form eines Hohlkegelstumpfs weitergebildet. Ein Hohlkegelstumpf ist ein Kegelstumpf mit einem Hohlraum. Der Hohlraum hat ebenso die Form eines Kegelstumpfs.

Durch die hohlkegelstumpfförmige Weiterbildung können die erste Federvorrichtung und/oder die zweite Federvorrichtung das gehäusefeste Mittel sowohl axial als auch radial gegen das gondelfeste Mittel abstützen. Dadurch erübrigt sich eine dritte Federvorrichtung.

Die hohlkegelstumpfförmig weitergebildete erste Federvorrichtung und zweite Federvorrichtung sind bevorzugt mit ihren sich verjüngenden Enden aufeinander zu gerichtet. Weiterbildungsgemäß haben also die erste Federvorrichtung und die zweite Federvorrichtung die Form eines Hohlkegelstumpfs, der sich in Richtung der jeweils anderen Federvorrichtung verjüngt. Der Hohlkegelstumpf, der die Form der ersten Federvorrichtung beschreibt, verjüngt sich also in Richtung der zweiten Federvorrichtung. Umgekehrt verjüngt sich der Hohlkegelstumpf, der die Form der zweiten Federvorrichtung beschreibt, in Richtung der ersten Federvorrichtung. Dadurch ergibt sich eine formschlüssige Fixierung des gondelfesten Mittels zwischen den Federvorrichtungen.

Das gondelfeste Mittel umfasst in einer bevorzugten Weiterbildung einen ersten Teil und einen zweiten Teil. Der erste Teil und der zweite Teil bilden physisch voneinander getrennte Stücke, sind also nicht einstückig miteinander verbunden. Weiterhin sind der erste Teil und der zweite Teil miteinander gefügt, vorzugsweise lösbar.

Die erste Federvorrichtung stützt das gehäusefeste Mittel gegen den ersten Teil ab. Entsprechend stützt die zweite Federvorrichtung das gehäusefeste Mittel gegen den zweiten Teil ab. Insbesondere kann die erste Federvorrichtung den ersten Teil des gehäusefesten Mittels gegen den ersten Teil des gondelfesten Mittels abstützen, wobei die zweite Federvorrichtung den zweiten Teil des gehäusefesten Mittels gegen den zweiten Teil des gondelfesten Mittels abstützt.

Durch die zweiteilige Ausführung des gondelfesten Mittels und gegebenenfalls des gehäusefesten Mittels lässt sich die Anordnung vereinfacht montieren und im Falle einer lösbaren Fügeverbindung auch demontieren.

Eine erfindungsgemäße Windkraftanlage weist ein Getriebe und eine Gondel auf. Erfindungsgemäß weist die Windkraftanlage zudem drei oder vier Anordnungen der oben beschriebenen Art auf, mit denen ein Gehäuse des Getriebes in der Gondel fixiert ist.

Bevorzugt ist die Windkraftanlage derart weitergebildet, dass die erste Federvorrichtung und die zweite Federvorrichtung der drei oder vier Anordnungen jeweils auf unterschiedlichen Seiten derselben parallel zu der Drehachse der Eingangswelle des Getriebes verlaufenden Ebene angeordnet sind. Dadurch ergibt sich eine besonders einfache Ausgestaltung des gehäusefesten Mittels. Insbesondere ist es möglich, ein plattenförmiges Bauteil zu verwenden, welches das gondelfeste Mittel mindestens zweier der Anordnungen, vorzugsweise sämtlicher der drei oder vier Anordnungen, bildet. Beispiele für Lösungen aus dem Stand der Technik finden sich in den folgenden Dokumenten: DE 10 2010 009863 A1, US 9 366 330 B2, US 2008/308980 A1 und JP 2013 144970 A.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Fig. 1 einen federnd gelagerten Antriebsstrang einer Windkraftanlage;
Fig. 2 Federelemente einer Federvorrichtung;
Fig. 3 eine Anordnung mit einem hohlkegelstumpfförmigen Elastomer; und
Fig. 4 eine Anordnung mit zwei hohlkegelstumpfförmigen Elastomeren.

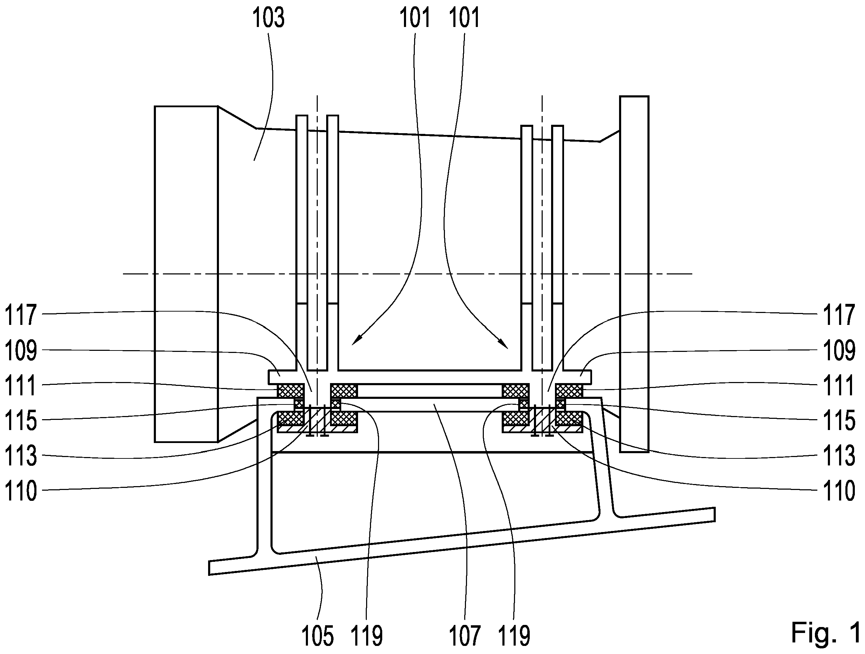

Figur 1 zeigt Getriebelagerungen 101 mit zylindrischer Grundform. Mittels der Getriebelagerungen 101 wird ein Gehäuse 103 in einem gondelfesten Maschinenträger 105 fixiert. In dem Gehäuse 103 ist die Hauptwelle einer Windkraftanlage gelagert.
Die Hauptwelle verbindet einen Rotor der Windkraftanlage drehfest mit der Eingangswelle eines Getriebes.

Der Maschinenträger 105 weist eine Platte 107 auf. Diese bildet zusammen mit einem gehäusefesten Stützfuß 109, einem Gegenhalter 110 und drei Elastomeren 111, 113, 115 jeweils eine Getriebelagerung 101.

Die Elastomere 111, 113, 115 haben jeweils die Form eines Hohlzylinders, das heißt eines Zylinders mit zylindrischem Hohlraum. Durch die Hohlräume der Elastomere 111, 113, 115 erstreckt sich ein von dem Stützfuß 109 und dem Gegenhalter 110 ausgebildeter Bolzen 117. Der Bolzen 117 verbindet den Stützfuß 109 mit dem Gegenhalter 110. Zu Montage- und Demontagezwecken ist er zweistückig ausgeführt.

Ein erster Elastomer 111 ist zwischen dem Stützfuß 109 und der Platte 107 angeordnet. Auf die Weise kann sich der Stützfuß über den Elastomer 111 in eine erste Richtung in der Platte 107 abstützen.

Auf einer dem Stützfuß 109 gegenüberliegenden Seite der Platte 107 ist der Gegenhalter 110 angeordnet. Zwischen dem Gegenhalter 110 und der Platte 107 befindet sich ein zweiter Elastomer 113. Über diesen kann sich der Gegenhalter 110 entgegengesetzt zu der ersten Richtung in eine zweite Richtung in der Platte 107 abstützen. Durch die Anordnung des Stützfußes 109 und des Gegenhalters 110 auf gegenüberliegenden Seite der Platte 107 wird das Gehäuse 107 über dem ersten Elastomer 111 und dem zweiten Elastomer 113 in die erste Richtung und die zweite Richtung in der Platte 107 fixiert.

Zur Fixierung orthogonal dazu dient ein dritter Elastomer 115. Dieser befindet sich in einer Aussparung 119 der Platte 107. Über den dritten Elastomer 115 wird der Bolzen 117 gegen die Aussparung 119 abgestützt.

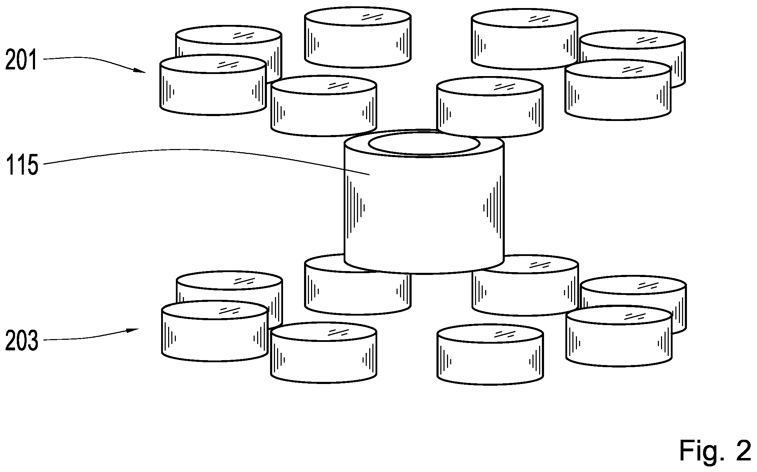

Anstelle eines einzelnen, einstückig ausgeführten ersten Elastomers 111 und eines zweiten, ebenso einstückig ausgeführten zweiten Elastomers 113 lassen sich, wie in Figur 2 dargestellt jeweils mehrere Elastomere verwenden. Die Elastomere sind in zwei Gruppen - einer ersten Gruppe 201 und einer zweiten Gruppe 203 angeordnet.

Die Elastomere der ersten Gruppe 201 befinden sich zwischen dem Stützfuß 109 und der Platte 107. Sie sind drehsymmetrisch um den Bolzen 107 herum gruppiert und übernehmen die Funktion des ersten Elastomers 111 aus Figur 1.

Die Elastomere der zweiten Gruppe 203 sind zwischen dem Gegenhalter 110 und der Platte 107 angeordnet. Auch sie sind rotationssymmetrisch um den Bolzen 117 herum gruppiert. Entsprechend übernehmen die Elastomere der zweiten Gruppe 203 die Funktion des zweiten Elastomers 113 aus Figur 1.

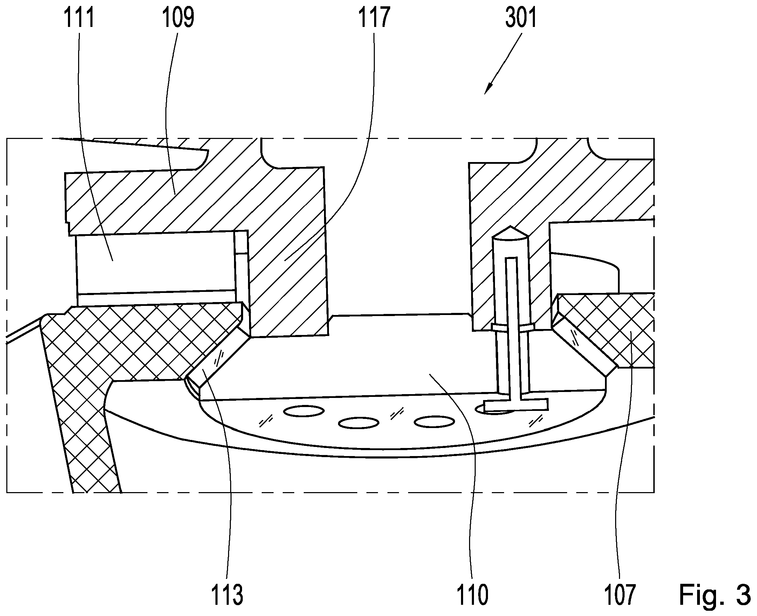

Eine in Figur 3 dargestellte Getriebelagerung 301 kommt ohne dritter Elastomer 115 aus. Dies wird erreicht durch eine Ausgestaltung des zweiten Elastomers 113 als Hohlkegelstumpf. Eine Auflagefläche in der Platte 107 und dem Gegenhalter 111 ist jeweils entsprechend ausgestaltet, d.h. haben die Form einer Mantelfläche eines Kegelstumpfs.

Durch die hohlkegelstumpfförmige Ausgestaltung kann der zweite Elastomer 113 Kräfte in axialer und radialer Richtung aufnehmen. Der erste Elastomer 111 hingegen hat in Übereinstimmung mit Figur 1 eine hohlzylindrische Form.

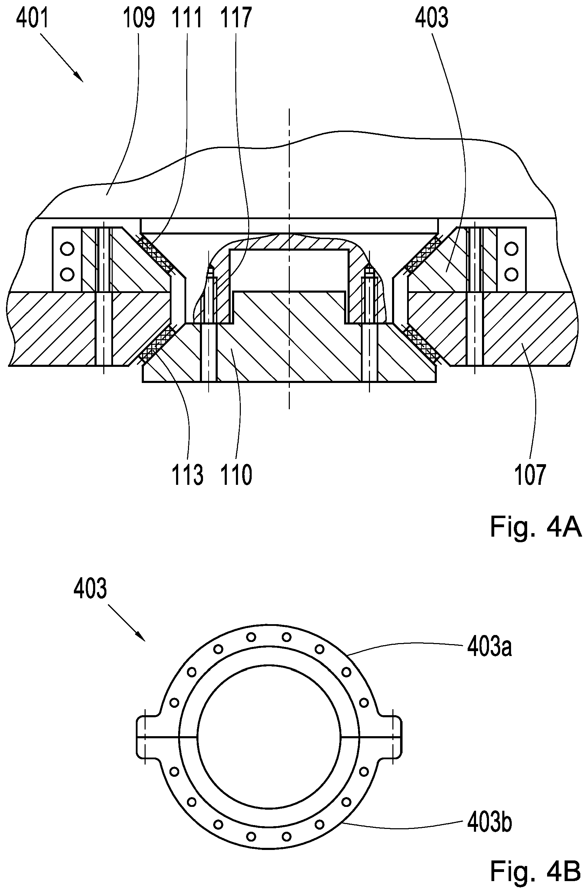

Bei einer in den Figuren 4A und 4B dargestellten Getriebelagerung 401 ist neben dem zweiten Elastomer 113 auch der erste Elastomer 111 hohlkegelstumpfförmig ausgestaltet. Auch hier ist kein dritter Elastomer 115 vorhanden, da der erste Elastomer 113 und der zweite Elastomer 111 aufgrund ihrer hohlkegelförmigen Ausgestaltung auch Radialkräfte aufnehmen können. Die Getriebelagerung 401 gemäß den Figuren 4A und 4B weist also wie auch die Getriebelagerung 301 gemäß Figur 3 genau zwei Elastomere - den ersten Elastomer 111 und den zweiten Elastomer 113 - auf.

Auf der Platte 107 ist einen Stützflansch 403 für den ersten Elastomer 111 angebracht. Dieser ist mit der Platte 107 verschraubt. Der erste Elastomer 111 ist zwischen dem Stützflansch 403 und dem Stützfuß 109 verspannt.

Der Stützflansch 401 ist zweistückig ausgeführt. Er besteht aus einer ersten Hälfte 403a und einer zweiten Hälfte 403b. Die beiden Hälften 403a, 403b sind miteinander verschraubt. Dadurch lässt sich der Stützflansch 401 einfach montieren und demontieren. Insbesondere ist der Stützflansch 401 auch nachträglich noch zu Reparatur- und Wartungszwecken demontierbar.

### Bezugszeichen

- 101: Getriebelagerung
- 103: Gehäuse
- 105: Maschinenträger
- 107: Platte
- 109: Stützfuß
- 110: Gegenhalter
- 111: Elastomer
- 113: Elastomer
- 115: Elastomer
- 117: Bolzen
- 119: Aussparung
- 201: erste Gruppe von Elastomeren
- 203: zweite Gruppe von Elastomeren
- 301: Getriebelagerung
- 401: Getriebelagerung
- 403: Stützflansch
- 403a: erste Hälfte des Stützflansches
- 403b: zweite Hälfte des Stützflansches

## Patentansprüche

1. Anordnung (101, 301, 401) zur Fixierung eines Gehäuses (103) eines Windkraftgetriebes in einer Gondel, mit einen gehäusefesten Mittel (109, 110), einem gondelfesten Mittel (105, 107, 403) und mindestens zwei Federvorrichtungen (111, 113, 201, 203); wobei
die Federvorrichtungen (111, 113, 201, 203) das gehäusefeste Mittel (109, 110) in entgegengesetzte Richtungen entlang einer Stützachse gegen das gondelfeste Mittel (105, 107, 403) abstützen; wobei
die Federvorrichtungen (111, 113, 201, 203) auf unterschiedlichen Seiten einer parallel zu einer Drehachse einer Eingangswelle des Windkraftgetriebes verlaufenden Ebene angeordnet sind; **dadurch gekennzeichnet, dass**
ein Teil (107, 403) des das gondelfesten Mittels (105, 107, 403) zwischen den Federvorrichtungen (111, 113, 201, 203) und zwischen einem ersten Teil (109) und einem zweiten Teil (110) des gehäusefesten Mittels (109, 110) angeordnet ist; wobei eine erste Federvorrichtung (111, 201) zwischen dem ersten Teil (109) des gehäusefesten Mittels (109, 110) und dem Teil (107, 403) des gondelfesten Mittels (105, 107) angeordnet ist; und wobei
eine zweite Federvorrichtung (113, 203) zwischen dem zweiten Teil (110) des gehäusefesten Mittels (109, 110) und dem Teil (107, 403) des gondelfesten Mittels (105, 107, 403) angeordnet ist.

2. Anordnung (101, 301, 401) nach Anspruch 1; **dadurch gekennzeichnet, dass** mindestens eine der mindestens zwei Federvorrichtung (111, 113, 201, 203) bezüglich der Stützachse drehsymmetrisch ist.

3. Anordnung (101, 301, 401) nach einem der vorhergehenden Ansprüche; **dadurch gekennzeichnet, dass**
die Federvorrichtungen (111, 113, 201, 203) bezüglich der Ebene zueinander spiegelsymmetrisch sind.

4. Anordnung (101, 301, 401) nach einem der vorhergehenden Ansprüche; **dadurch gekennzeichnet, dass**
die Ebene das gehäusefeste Mittel (109, 110) und/oder das gondelfeste Mittel (105, 107, 403) schneidet.

5. Anordnung (101, 301, 401) nach einem der vorhergehenden Ansprüche; **dadurch gekennzeichnet, dass**
das gehäusefeste Mittel (109, 110) ein Verbindungselement (117) aufweist, welches den ersten Teil (109) und den zweiten Teil (110) miteinander verbindet, und welches durch eine Aussparung (119) des gondelfesten Mittels (105,107, 403) hindurch verläuft.

6. Anordnung (101) nach dem vorhergehenden Anspruch; **gekennzeichnet durch** eine dritte Federvorrichtung (115), die mindestens teilweise in der Aussparung (119) angeordnet ist; wobei
das Verbindungselement (117) durch eine Aussparung der dritten Federvorrichtung (115) hindurch verläuft.

7. Anordnung (301, 401) nach einem der vorhergehenden Ansprüche; **dadurch gekennzeichnet, dass**
die erste Federvorrichtung (111) und/oder die zweite Federvorrichtung (113) die Form eines Hohlkegelstumpfs haben.

8. Anordnung (401) dem vorhergehenden Anspruch; **dadurch gekennzeichnet, dass** die erste Federvorrichtung (111) und die zweite Federvorrichtung (113) die Form eines Hohlkegelstumpfs haben, der sich in Richtung der jeweils anderen Federvorrichtung (113, 111) verjüngt.

9. Anordnung (101, 301, 401) nach einem der vorhergehenden Ansprüche; **dadurch gekennzeichnet, dass**
der erste Teil (109) und der zweite Teil (110) des gehäusefesten Mittels (109, 110) als physisch voneinander getrennte Stücke ausgeführt und miteinander gefügt sind; wobei
eine erste Federvorrichtung (111, 201) den ersten Teil (109) und die zweite Federvorrichtung (113, 203) den zweiten Teil () gegen das gondelfeste Mittel abstützt.

10. Anordnung (401) nach einem der vorhergehenden Ansprüche; **dadurch gekennzeichnet, dass**
das gondelfeste Mittel (105, 107, 403) einen ersten Teil (403) und einen zweiten Teil (105, 107) umfasst; wobei
der erste Teil (403) und der zweite Teil (105, 107) physisch voneinander getrennte Stücke bilden und miteinander gefügt sind; wobei
die erste Federvorrichtung (111) das gehäusefeste Mittel (109, 110) gegen den ersten Teil (403) und die zweite Federvorrichtung (113) das gehäusefeste Mittel (109, 110) gegen den zweiten Teil (105, 107) abstützt.

11. Windkraftanlage mit einem Getriebe und einer Gondel; **gekennzeichnet durch** insgesamt drei oder vier Anordnungen (101, 301, 401) nach einem der vorhergehenden Ansprüche; wobei
ein Gehäuse (103) des Windkraftgetriebes mit den Anordnungen (101, 301, 401) in der Gondel fixiert ist.

12. Windkraftanlage nach dem vorhergehenden Anspruch; **dadurch gekennzeichnet, dass**
die erste Federvorrichtung (111, 201) und die zweite Federvorrichtung (113, 203) der drei oder vier Anordnungen (101, 301, 401) jeweils auf unterschiedlichen Seiten derselben parallel zu einer Drehachse einer Eingangswelle des Windkraftgetriebes verlaufenden Ebene angeordnet sind.

## Claims

1. Assembly (101, 301, 401) for securing a housing (103) of a wind turbine gearbox in a nacelle, having a means (109, 110) fastened to the housing, a means (105, 107, 403) fastened to the nacelle, and at least two spring devices (111, 113, 201, 203); wherein
the spring devices (111, 113, 201, 203) support the means (109, 110) fastened to the housing, in opposite directions along a support axis, against the means (105, 107, 403) fastened to the nacelle; wherein
the spring devices (111, 113, 201, 203) are arranged on different sides of a plane extending parallel to an axis of rotation of an input shaft of the wind turbine gearbox; **characterized in that**
a part (107, 403) of the means (105, 107, 403) fastened to the nacelle is arranged between the spring devices (111, 113, 201, 203) and between a first part (109) and a second part (110) of the means (109, 110) fastened to the housing; wherein
a first spring device (111, 201) is arranged between the first part (109) of the means (109, 110) fastened to the housing and the part (107, 403) of the means (105, 107) fastened to the nacelle; and wherein
a second spring device (113, 203) is arranged between the second part (110) of the means (109, 110) fastened to the housing and the part (107, 403) of the means (105, 107, 403) fastened to the nacelle.

2. Assembly (101, 301, 401) according to Claim 1; **characterized in that**
at least one of the at least two spring devices (111, 113, 201, 203) is rotationally symmetrical with respect to the support axis.

3. Assembly (101, 301, 401) according to either of the preceding claims; **characterized in that**
the spring devices (111, 113, 201, 203) are mutually mirror-symmetrical with respect to the plane.

4. Assembly (101, 301, 401) according to one of the preceding claims; **characterized in that**
the plane intersects the means (109, 110) fastened to the housing and/or the means (105, 107, 403) fastened to the nacelle.

5. Assembly (101, 301, 401) according to one of the preceding claims; **characterized in that**
the means (109, 110) fastened to the housing has a connecting element (117), which connects the first part (109) and the second part (110) to one another, and which extends through a cutout (119) in the means (105, 107, 403) fastened to the nacelle.

6. Assembly (101) according to the preceding claim; **characterized by**
a third spring device (115), which is at least partially arranged in the cutout (119); wherein
the connecting element (117) extends through a cutout in the third spring device (115).

7. Assembly (301, 401) according to one of the preceding claims; **characterized in that**
the first spring device (111) and/or the second spring device (113) have/has the shape of a hollow conical frustum.

8. Assembly (401) according to the preceding claim; **characterized in that**
the first spring device (111) and the second spring device (113) have the shape of a hollow conical frustum, which tapers towards the respective other spring device (113, 111).

9. Assembly (101, 301, 401) according to one of the preceding claims; **characterized in that**
the first part (109) and the second part (110) of the means (109, 110) fastened to the housing are formed as physically separate pieces and are joined to one another; wherein
a first spring device (111, 201) supports the first part (109) and the second spring device (113, 203) supports the second part () against the means fastened to the nacelle.

10. Assembly (401) according to one of the preceding claims; **characterized in that**
the means (105, 107, 403) fastened to the nacelle comprises a first part (403) and a second part (105, 107); wherein
the first part (403) and the second part (105, 107) form physically separate pieces and are joined to one another; wherein
the first spring device (111) supports the means (109, 110) fastened to the housing against the first part (403) and the second spring device (113) supports the means (109, 110) fastened to the housing against the second part (105, 107).

11. Wind turbine having a gearbox and a nacelle; **characterized by**
a total of three or four assemblies (101, 301, 401) according to one of the preceding claims; wherein
a housing (103) of the wind turbine gearbox is secured in the nacelle using the assemblies (101, 301, 401).

12. Wind turbine according to the preceding claim; **characterized in that**
the first spring device (111, 201) and the second spring device (113, 203) of the three or four assemblies (101, 301, 401) are each arranged on different sides of the same plane extending parallel to an axis of rotation of an input shaft of the wind turbine gearbox.

## Revendications

1. Ensemble (101, 301, 401) de fixation d'un boîtier (103) d'une transmission dans une nacelle, avec un moyen (109, 110) solidaire du boîtier, un moyen solidaire de la nacelle (105, 107, 403) et au moins deux dispositifs de ressort (111, 113, 201, 203) ;
les dispositifs de ressort (111, 113, 201, 203) soutenant le moyen solidaire du boîtier (109, 110) dans des directions opposées le long d'un axe d'appui contre le moyen solidaire de la nacelle (105, 107, 403) ;
les dispositifs de ressort (111, 113, 201, 203) étant disposés sur différents côtés d'un plan s'étendant parallèlement à un axe de rotation d'un arbre d'entrée de la transmission d'éolienne ; **caractérisé en ce que** une partie (107, 403) du moyen solidaire de la nacelle (105, 107, 403) est disposée entre les dispositifs de ressort (111, 113, 201, 203) et entre une première partie (109) et une deuxième partie (110) du moyen solidaire du boîtier (109, 110) ;
un premier dispositif de ressort (111, 201) étant disposé entre la première partie(109) du moyen solidaire du boîtier (109, 110) et la partie (107, 403) du moyen solidaire de la nacelle (105, 107) ; et
un premier dispositif de ressort (113, 203) étant disposé entre la deuxième partie (110) du moyen solidaire du boîtier (109, 110) et la partie (107, 403) du moyen solidaire de la nacelle (105, 107, 403).

2. Ensemble (101, 301, 401) selon la revendication 1 ; **caractérisé en ce que**
au moins un des au moins deux dispositifs de ressort (111, 113, 201, 203) est symétrique en rotation par rapport à l'axe d'appui.

3. Ensemble (101, 301, 401) selon l'une des revendications précédentes ; **caractérisé en ce que**
les dispositifs de ressort (111, 113, 201, 203) sont en symétrie en miroir les uns par rapport aux autres par rapport au plan.

4. Ensemble (101, 301, 401) selon l'une des revendications précédentes ; **caractérisé en ce que**
le plan coupe le moyen solidaire du boîtier (109, 110) et/ou le moyen solidaire de la nacelle (105, 107, 403).

5. Ensemble (101, 301, 401) selon l'une des revendications précédentes ; **caractérisé en ce que**
le moyen solidaire du boîtier (109, 110) comporte un élément de liaison (117), lequel relie la première partie (109) et la deuxième partie (110) l'une à l'autre, et lequel s'étend à travers un évidement (119) du moyen solidaire de la nacelle (105, 107, 403).

6. Ensemble (101) selon la revendication précédente ; **caractérisé par**
un troisième dispositif de ressort (115), qui est disposé au moins en partie dans l'évidement (119) ;
l'élément de liaison (117) s'étendant à travers un évidement du troisième dispositif de ressort (115).

7. Ensemble (301, 401) selon l'une des revendications précédentes ; **caractérisé en ce que**
le premier dispositif de ressort (111) et/ou le deuxième dispositif de ressort (113) ont la forme d'un cône tronqué creux.

8. Ensemble (401) selon la revendication précédente ; **caractérisé en ce que**
le premier dispositif de ressort (111) et le deuxième dispositif de ressort (113) ont la forme d'un cône tronqué creux, qui se rétrécit en direction de l'autre dispositif de ressort (113, 111) respectivement.

9. Ensemble (101, 301, 401) selon l'une des revendications précédentes ; **caractérisé en ce que**
la première partie (109) et la deuxième partie (110) du moyen solidaire du boîtier (109, 110) sont réalisées comme des pièces séparées physiquement l'une de l'autre et sont assemblées l'une à l'autre ;
un premier dispositif de ressort (111, 201) soutenant la première partie (109) et le deuxième dispositif de ressort (113, 203) soutenant la deuxième partie () contre le moyen solidaire de la nacelle.

10. Ensemble (401) selon l'une des revendications précédentes ; **caractérisé en ce que**
le moyen solidaire de la nacelle (105, 107, 403) comprend une première partie (403) et une deuxième partie (105, 107) ;
la première partie (403) et la deuxième partie (105, 107) formant des pièces séparées physiquement l'une de l'autre et étant assemblées l'une à l'autre ;
le premier dispositif de ressort (111) soutenant le moyen solidaire du boîtier (109, 110) contre la première partie (403) et le deuxième dispositif de ressort (113) soutenant le moyen solidaire du boîtier (109, 110) contre la deuxième partie (105, 107).

11. Eolienne avec une transmission et une nacelle ; **caractérisée par**
au total trois ou quatre ensembles (101, 301, 401) selon l'une des revendications précédentes ;
un boîtier (103) de la transmission d'éolienne avec les ensembles (101, 301, 401) étant fixé dans la nacelle.

12. Eolienne selon la revendication précédente ; **caractérisée en ce que**
le premier dispositif de ressort (111, 201) et le deuxième dispositif de ressort (113, 203) des trois ou quatre ensembles (101, 301, 401) sont disposés chacun sur des côtés différents du même plan s'étendant parallèlement à un axe de rotation d'un arbre d'entrée de la transmission d'éolienne.
